Europäisches Patentamt

European Patent Office

Office européen des brevets

(19)

(11) Veröffentlichungsnummer: **0 299 516**

**A2**

# EUROPÄISCHE PATENTANMELDUNG

(21) Anmeldenummer: **88111415.1**

(22) Anmeldetag: **15.07.88**

(51) Int. Cl.⁴: **A47J 39/00 , A47J 41/00**

(30) Priorität: **15.07.87 DE 8709745 U**

(43) Veröffentlichungstag der Anmeldung:
**18.01.89 Patentblatt 89/03**

(84) Benannte Vertragsstaaten:
**AT CH FR GB LI SE**

(71) Anmelder: **CAP CALL A PIZZA
SCHNELLRESTAURANT
BETRIEBSGESELLSCHAFT MBH.
Nussbaumstrasse 4
D-8091 Edling(DE)**

(72) Erfinder: **Hochreiter, Rudolf
Nussbaumstrasse 4
D-8091 Edling(DE)**

(74) Vertreter: **Patentanwälte Leinweber &
Zimmermann
Rosental 7/II Aufg.
D-8000 München 2(DE)**

(54) Transportbehälter für das Warmhalten von zubereiteten Nahrungsmitteln.

(57) Die Erfindung betrifft einen Transportbehälter für das Warmhalten von zubereiteten Nahrungsmitteln. Dieser zeichnet sich erfindungsgemäß dadurch aus, daß er nicht nur isolierende Eigenschaften aufweist, sondern in seinem Inneren so ausgestaltet ist, daß ein zusätzlicher Wärmespeicher auswechselbar mit den warmzuhaltenden Speisen in das Behälterinnere eingebracht werden kann.

EP 0 299 516 A2

## Transportbehälter für das Warmhalten von zubereiteten Nahrungsmitteln

Die Erfindung betrifft einen Transportbehälter für das Warmhalten von zubereiteten Nahrungsmitteln mit einem doppelwandigen, isolierenden Behälter und einer verschließbaren Entnahmeöffnung.

Für das Warmhalten von Nahrungsmitteln, insbesondere von flüssigen Nahrungsmitteln ist die Verwendung eines Thermos bekannt. Dieser besteht aus einem doppelwandigen, evakuierten Glasbehälter. Warm eingefüllte Nahrungsmittel halten wegen der guten Isolierung der Wandung ihre Temperatur. Da es nur auf die Isolierung ankommt, ist der Thermos selbstverständlich auch zum Kühlhalten geeignet. Beim Thermos wird grundsätzlich nur die Temperatur des eingefüllten Nahrungsmittels möglichst gehalten. So ist beispielsweise eine zusätzliche Energiezufuhr für das Warmhalten nicht vorgesehen.

Bekannt ist es auch schon, Wärmeplatten für das Warmhalten von Speisen zu verwenden. Diese werden aber nicht für Transportzwecke eingesetzt und sind deshalb auch nicht im Transportbehälter integriert.

Aufgabe der Erfindung ist es, einen Transportbehälter für Nahrungsmittel zu schaffen, bei dem gute Isolierung und Warmhalten der Speisen im Warmraum durch eine zusätzliche Energiequelle ermöglicht und überdies mit der Möglichkeit kombiniert sind, nicht warmzuhaltende Speisen in einem vom Warmraum getrennt vorgesehenen Raum ebenfalls mitzuführen.

Diese Aufgabe wird erfindungsgemäß dadurch gelöst, daß der Behälterinnenraum unterteilt ist und in einem Teil einen auswechselbar gehalterten Wärmespeicher aufweist. Ein anderer Teil des Behälters, nämlich ein eigener Raum oder einfach eine Stellfläche auf der Außenseite, dient als Aufnahme für den Transport nicht zu wärmender Speisen, wie Salat und Getränke. Ein derart ausgelegter Transportbehälter ist besonders geeignet für den Transport von Nahrungsmitteln, die für längere Zeit auf einer recht hohen Temperatur gehalten werden müssen, wie beispielsweise Pizza.

Im Warmraum ist zwischen dem Aufnahmeraum für die warm zu haltenden Speisen und den Aufnahmeraum für den auswechselbaren Wärmespeicher eine gitterförmig durchbrochene Unterteilungswand angeordnet. Diese erlaubt das Zirkulieren der angewärmten Luft vom Aufnahmeraum für den Wärmespeicher in den Aufnahmeraum für die warm zu haltende Speise. Wegen des Aufsteigens der warmen Luft ist eine Anordnung besonders günstig, bei der die gitterförmig unterbrochene Wand horizontal und der Wärmespeicher unter ihr angeordnet ist. Eine horizontal liegende Unterteilungswand ist auch dann stabil gehalten, wenn sie lediglich von unten abgestützt und von oben durch das Gewicht der aufgestellten Nahrungsmittelbehälter belastet ist. Da sie im übrigen frei aufgelegt und jederzeit entnehmbar ist, kann sie vor allem für Reinigungszwecke der Unterteilungswand selbst und des gesamten Behälters jederzeit leicht und ohne Aufwand aus dem Behälterinnenraum entnommen werden.

Für den Wärmespeicher ist zweckmäßig eine Schubführung mit Endanschlag vorgesehen. Er kann dann schlittenartig leicht eingeschoben und für die Wiederaufladung entnommen werden. Auch das ergibt somit eine ganz einfache Handhabung.

Die Mitführung der nicht zu wärmenden Speisen kann einfach auf der Oberseite des Behälters erfolgen. Dort werden die Speisen aufgestellt und durch einen umlaufenden, nach oben vorstehenden Flansch auf einfache Weise am Herunterfallen gehindert.

Sämtliche Teile könne aus Aluminium und/oder Edelstahl gefertigt sein. Aluminium hat ein geringes Gewicht und ist somit für Transpsortzwecke gut geeignet. Edelstahl ist besonders hygienisch und leicht sauberzuhalten und zu pflegen. Es ist deshalb auch denkbar, den äußeren Behälterkasten aus Aluminium, den inneren Behälterkasten aber aus Edelstahl zu fertigen.

Zur Verbesserung der Isolationseigenschaften sollen Außenwand und Innenwand einen Abstand voneinander haben und durch eine Isolierschicht voneinander getrennt sein. Der Abstand soll, damit der Behälter nicht zu umfangreich wird, auf etwa 25 mm Freiraum zwischen den Wänden beschränkt werden. Der Freiraum wird beispielsweise mit Styroporplatten gefüllt. Die Eckbereiche können mit einem gut isolierenden Zweikomponentenschaum gefüllt sein.

Man erhält so einen Kombibehälter für den gleichzeitigen Transport warm zu haltender und nicht zu wärmender Speisen, der robust und einfach zu handhaben, zu reinigen und zu pflegen ist. Der Behälter ist somit insbesondere für die Hauszulieferung von Speisen im Rahmen gewerblicher oder karitativer Zwecke eine ausgezeichnete Organisationshilfe.

In der Zeichnung ist die Erfindung beispielsweise veranschaulicht und zwar zeigen

Fig. 1 einen Schnitt bei Linie B-B von Fig. 4,
Fig. 2 einen Schnitt bei Linie A-A von Fig. 3,
Fig. 3 eine Seitenansicht des Behälters,
Fig. 4 eine Vorderansicht des Behälters,
Fig. 5 eine Draufsicht des Behälters,
Fig. 6 eine Einzelheit von Fig. 2 zum Aufbau der Unterteilung zwischen dem Aufnahmeraum für die zu wärmenden Speisen und dem Aufnahmeraum für den Wärmespeicher.

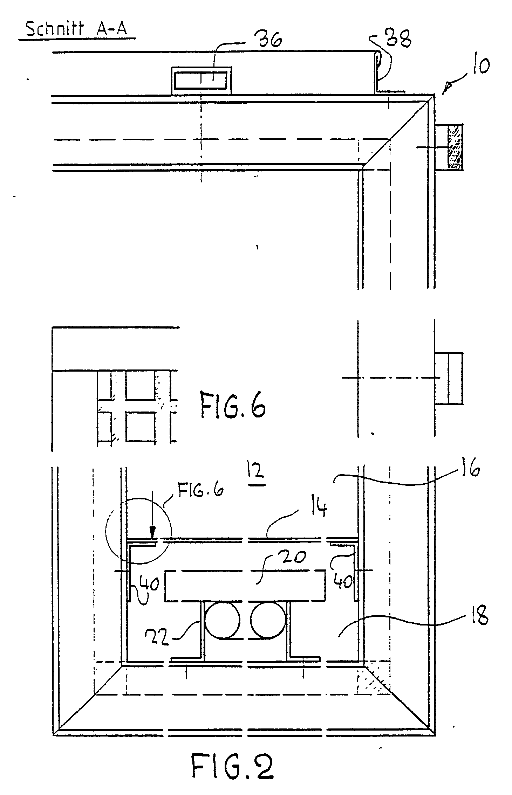

Ein Behälter 10 weist vorzugsweise kubische Form mit quadratischem Grundriß und einer Höhe auf, die ungefähr die Hälfte der Quadratseitenlänge beträgt. Der Behälterinnenraum 12 weist die gleiche Konfiguration auf. Der Behälterinnenraum ist durch einen Horizontalboden 14 in Form einer gelochten Aluminiumplatte mit Edelstahleinfassung (Fig. 6) in einen obenliegenden Speisenraum 16 und einen untenliegenden Wärmespeicherraum 18 unterteilt, in dem auswechselbar ein aufladbarer Wärmespeicher 20 angeordnet ist.

Der Wärmespeicher 20 ist von herkömmlicher Bauart, wie sie von Warmhalteplatten in Restaurants bekannt ist. Zweckmäßig wird der Wärmespeicher in einem entsprechenden Gerät mit Netzanschluß ständig aufgeheizt bereitgehalten, bei Bedarf aus dem Aufheizgerät entnommen und in seine Schubführung 22 mit Endanschlag 24 eingeschoben.

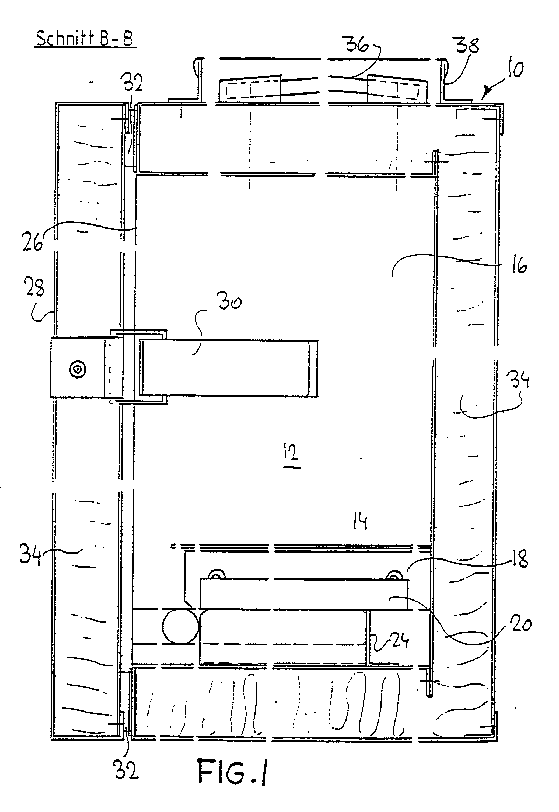

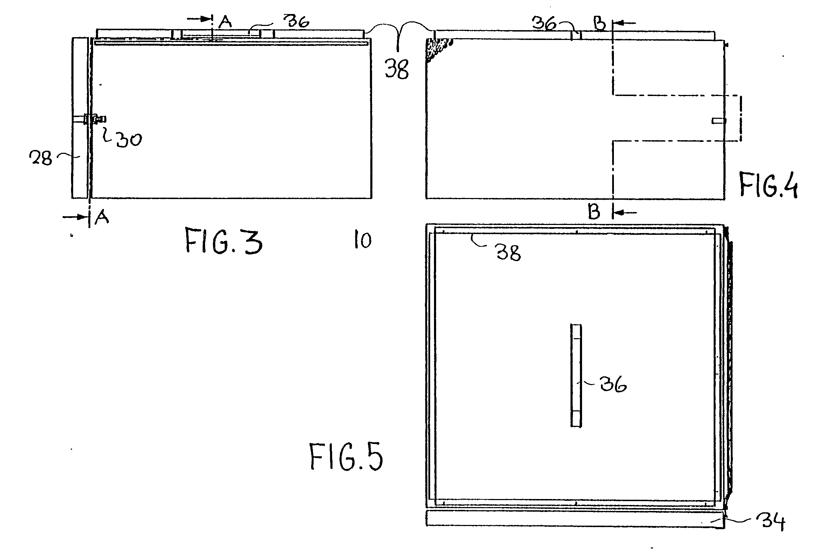

Der Speiseraum 16 hat auf seiner Vorderseite (in den Fig. 1 und 3 links) eine große Öffnung 26, die durch eine Tür 28 verschließbar ist. Hierfür ist die Tür 28 einseitig in Scharnieren aufgehängt und anderseitig mit einem sogenannten Kistenverschluß 30 versehen, mit dessen Hilfe die Tür auf die Öffnung 26 und eine diese rings umgreifende Dichtung 32 niedergezogen und hier verschlossen werden kann.

Der Behälter 10 und die Tür 28 sind doppelwandig ausgeführt. Die Außenwand und die Innenwand weisen einen gewissen Abstand voneinander auf, der vorzugsweise 25 mm beträgt. Der Freiraum zwischen Behälteraußenwand und Behälterinnenwand ist mit einem wärmeisolierenden Material gefüllt, so daß eine Isolierschicht 34 entsteht. Diese Isolierschicht kann einfach aus Styroporplatten bestehen, die im gezeigten Ausführungsbeispiel in Tür, Oberwand und Unterwand eine Stärke von 25 mm, in der Rückwand eine Stärke von 20 mm aufweist. Die nicht zugänglichen Ecken sind mit einem isolierenden Zweikomponentenschaum gefüllt. Als Material für die Behälteraußenwand und die Behälterinnenwand ist Aluminium einer Stärke von 0,8 mm bestens geeignet. Wenn dies aus Gründen der erleichterten Pflege oder der größeren Ansehnlichkeit gewünscht wird, ist als Material auch Edelstahl verwendbar. Selbstverständlich ist auch eine Mischbauweise möglich, bei der die Außenwände aus Aluminium, die Innenwände aber aus Edelstahl bestehen.

Der Behälter weist oben einen Tragegriff 36 auf. Die Oberseite des Behälters ist eine ebene Platte, die ringsum von einem aufstehenden Flansch 38 umgeben wird, der eine Höhe von zumindest 15 mm aufweisen soll. Werden auf die flache Oberseite des Behälters Salatschüsseln oder gefüllte Trinkbecher gestellt, so werden diese durch den umlaufenden Flansch 38 beim Transport im Kraftfahrzeug oder beim Tragen von Hand hier gehalten und am Herabfallen gehindert. Es ergibt sich somit trotz einfachster Mittel eine besonders einfache Handhabung. Überdies sind hier Salat und Getränke, bei denen eine Erwärmung, wie im Behälterinnenraum 12 unerwünscht ist, einfach auf Umgebungstemperatur gehalten. Diese Kombination von einer Transportmöglichkeit eines Teils der Speisen bei Umgebungstemperatur und eines anderen Teils der Speisen in einem auf einer hohen Temperatur gehaltenen Warmraum ist ein Merkmal von wesentlicher Bedeutung für den erfindungsgemäßen Transportbehälter.

## Ansprüche

1. Transportbehälter für das Warmhalten von zubereiteten Nahrungsmitteln mit einem doppelwandigen, isolierenden Behälter und einer verschließbaren Entnahmeöffnung, dadurch gekennzeichnet, daß der Behälterinnenraum (12) unterteilt ist und in einem Teil (18) einen auswechselbar gehaltenen Wärmespeicher (20) aufweist.

2. Vorrichtung nach Anspruch 1, dadurch gekennzeichnet, daß die Unterteilung eine gitterförmig durchbrochene Wand (14) ist.

3. Vorrichtung nach Anspruch 1 oder 2, dadurch gekennzeichnet, daß die Unterteilung eine durchbrochene Metallplatte (14) ist, die horizontal angeordnet und auf von der Behälterwand nach innen vorstehenden Stützelementen abgestützt, zweckmäßig auf diese aufgelegt ist.

4. Vorrichtung nach Anspruch 3, dadurch gekennzeichnet, daß im Wärmespeicherraum (18) unter der Unterteilung eine Schubführung (22) mit Endanschlag (24) für den auswechselbaren Wärmespeicher (20) angeordnet ist.

5. Vorrichtung nach einem der Ansprüche 1 bis 4, dadurch gekennzeichnet, daß der Behälter (10) außer dem Wärmeraum (16) auch einen Transportraum (vgl. 38) für Speisenbehälter mit nicht zu wärmenden Speisen, wie Salatschalen o. dgl. aufweist.

6. Vorrichtung nach Anspruch 5, dadurch gekennzeichnet, daß die Außenseite des Behälters (10) oben eine ebene Fläche bildet, die von einem außen umlaufenden nach oben vorstehenden Flansch (38) umgeben ist.

7. Vorrichtung nach Anspruch 5, dadurch gekennzeichnet, daß auf der Außenseite des Behälters (10) oben Mulden für die Halterung der Speisenbehälter mit nicht zu wärmenden Speisen vorgesehen sind.

8. Vorrichtung nach einem der Ansprüche 1 bis 7, dadurch gekennzeichnet, daß der Behälter (10) aus Aluminium und/oder Edelstahl gefertigt ist.

9. Vorrichtung nach einem der Ansprüche 1 bis 8, dadurch gekennzeichnet, daß der Zwischenraum zwischen Behälteraußenwand und Behälterinnenwand mit einer Styroporplatte von ca. 20 mm Stärke gefüllt ist.

10. Vorrichtung nach Anspruch 9, dadurch gekennzeichnet, daß Eckbereiche mit Zweikomponentenschaum gefüllt sind.

Schnitt B-B

FIG.1

FIG.3

FIG.4

FIG.5

28

30

36

38

A

B

10

36

34

EP 0 299 516 A2

Schnitt A-A

36   38   10

FIG.6

FIG.6   12   16

14

20

40   40

22   18

FIG.2